# EUROPÄISCHE PATENTANMELDUNG

(11) **EP 3 916 251 A1**
(43) Veröffentlichungstag der Anmeldung: **01.12.2021**
(21) Anmeldenummer: 20176833.0
(22) Anmeldetag: 27.05.2020
(51) Int. Cl.: F16C 17/02, F16C 41/00, F16C 43/02, G01B 17/02, G01M 13/045, F16C 17/24

(54) **ULTRASCHALLBASIERTE SENSORANORDNUNG, ÜBERWACHUNGSVERFAHREN, SENSORSYSTEM, GLEITLAGERANORDNUNG UND GETRIEBE**

(71) Anmelder: Flender GmbH, 46395 Bocholt (DE)
(72) Erfinder: Furtmann, Alexander, 46399 Bocholt (DE); Dinter, Ralf Martin, 45888 Gelsenkirchen (DE)
(74) Vertreter: Michalski Hüttermann & Partner Patentanwälte mbB

(57) **Zusammenfassung**

Die Erfindung betrifft eine Sensoranordnung (10) zum Erfassen eines Winkelversatzes (30) zwischen einer ersten und einer zweiten Lagerkomponente (12,16) eines Gleitlagers (11). Die Sensoranordnung (10) umfasst zumindest zwei Ultraschallköpfe (20,22,24,26,28), die erfindungsgemäß zu einem separaten Erfassen jeweils einer Schmierfilmdicke (32,34) an unterschiedlichen Axialpositionen (27,29) des Gleitlagers (11) beabstandet angeordnet sind. Die Erfindung betrifft auch ein Verfahren (100) zum Erfassen eines Winkelversatzes (30) zwischen einer ersten und einer zweiten Lagerkomponente (12,14) in einem Gleitlager (11) unter Einsatz einer solchen Sensoranordnung (10). Ebenso betrifft die Erfindung ein korrespondierendes Sensorsystem (50) und eine entsprechend ausgestattete Gleitlageranordnung (55). Ferner betrifft die Erfindung ein Planetengetriebe (60) mit einer derartigen Sensoranordnung (10) und ein Computerprogrammprodukt (80) zum Simulieren eines Betriebsverhaltens einer solchen Sensoranordnung (10), die ein einem Gleitlager (11) eingesetzt wird.

## Beschreibung

Die Erfindung betrifft einen ultraschallbasierten Lagersensor zum Überwachen eines Gleitlagers, ein entsprechendes Überwachungsverfahren und ein Sensorsystem, das über einen solchen Lagersensor verfügt. Die Erfindung betrifft auch eine Gleitlageranordnung und ein Getriebe, die zumindest über den erfindungsgemäßen Lagersensor verfügen.

Aus der Offenlegungsschrift US 2009/241674 A1 ist ein Ultraschallsensor bekannt, der zum Erfassen eines Verschleißzustandes in einem Gleitlager ausgebildet ist. Dazu wird ein Ultraschallpuls ausgesendet und dessen Echo ausgewertet. Dabei wird unter anderem eine Ölfilmdicke basierend auf dem Echo des Ultraschallpulses ermittelt.

Die Druckschrift US 2004/045356 A1 ist ein Ultraschallsensor zum Messen einer Schmierfilmdicke in Wälzlagern, an Kolbenringen, Axiallagern und Gleitlagern bekannt. Der Ultraschallsensor sendet hierzu einen Puls aus, dessen Reflexion mittels einer Frequenzspektralanalyse ausgewertet wird. Der Ultraschallsensor ist in einer horizontalen Ebene gerastert ausgebildet um eine flächige Verteilung einer Schmierfilmdicke zu ermitteln.

Gleitlager werden in einer Vielzahl an Anwendungsgebieten eingesetzt, in denen sie steigenden mechanischen Beanspruchungen, und damit beträchtlichem Verschleiß unterworfen sind. Um vorzeitige Ausfälle von Gleitlagern vermeiden zu können und deren technisch sinnvoll nutzbare Lebensdauer ausschöpfen zu können, besteht Bedarf an einer Möglichkeit, einen vorliegenden Betriebszustand und einen vorliegenden Verschleißzustand des Gleitlagers präzise zu erfassen. Ebenso besteht die Anforderung, dass ein hierzu geeignetes Mittel zuverlässig, robust, einfach montierbar, kompakt und kosteneffizient sein soll. Der Erfindung liegt die Aufgabenstellung zugrunde, eine Möglichkeit hierzu bereitzustellen, die in zumindest einem der skizzierten Punkte eine Verbesserung bietet.

Die Aufgabenstellung wird durch eine erfindungsgemäße Sensoranordnung gelöst, die zum Erfassen eines Winkelversatzes zwischen einer ersten und einer zweiten Lagerkomponente eines Gleitlagers ausgebildet ist. Die erste und zweite Lagerkomponente bilden die im bestimmungsgemäßen Betrieb des Gleitlagers aufeinander abgleitenden Komponenten, zwischen denen ein Schmierfilm ausbildbar ist und die zueinander in Relativbewegung stehen. Die erste und zweite Lagerkomponente weisen jeweils eine Bauteilhauptachse auf, die in einem optimalen Betrieb parallel zueinander sind. Im optimalen Betrieb des Gleitlagers bildet eine der beiden Bauteilhauptachsen eine Drehachse des Gleitlagers. Der Winkelversatz ist hierbei im Wesentlichen als jegliche Abweichung gegenüber der parallelen Ausrichtung der Bauteilhauptachsen der ersten und zweiten Lagerkomponente aufzufassen. Erfindungsgemäß weist die Sensoranordnung hierzu zumindest zwei Ultraschallköpfe auf, die zu einem Senden und Empfangen von Ultraschallpulsen ausgebildet sind. Hierzu können die Ultraschallköpfe beispielsweise separate Sende- und Empfangseinheiten aufweisen, die funktionell gekoppelt sind, oder kombinierte Sende- und Empfangsvorrichtungen aufweisen. Die zumindest zwei Ultraschallköpfe sind entlang einer der Bauteilhauptachsen axial beabstandet zueinander angeordnet. Dementsprechend sind die zumindest zwei Ultraschallköpfe dazu geeignet, an unterschiedlichen Axialpositionen, bezogen auf die entsprechende Bauteilhauptachse, eine dort vorliegende Schmierfilmdicke separat zu erfassen. Durch ein Erfassen von Schmierfilmdicken an unterschiedlichen Axialpositionen ist zwischen den entsprechenden Schmierfilmdicken eine Differenz ermittelbar. Je höher im Betrieb des Gleitlagers die Differenz zwischen zwei Schmierfilmdicken an unterschiedlichen Axialpositionen ist, umso größer ist der Winkelversatz zwischen der ersten und zweiten Lagerkomponente. Die erfindungsgemäße Sensoranordnung ist folglich zu einem berührungslosen Erfassen des Winkelversatzes zwischen der ersten und zweiten Lagerkomponente des Gleitlagers ausgebildet. Der Erfindung liegt unter anderem die Erkenntnis zugrunde, dass ein Winkelversatz zwischen den Lagerkomponenten eines Gleitlagers für die vorliegende Beanspruchungssituation eine erhöhte Aussagekraft bietet. Je höher ein Winkelversatz ist, umso eher treten ungleichmäßige Beanspruchungen des Gleitlagers ein, die zu lokal erhöhten Pressungen führen können. Daraus wiederum kann ein erhöhter Verschleiß resultieren. Die erfindungsgemäße Sensoranordnung bietet eine einfache und gleichzeitig präzise Möglichkeit, einen solchen Winkelversatz zu erkennen und gegebenenfalls frühzeitig Gegenmaßnahmen beim Betrieb des Gleitlagers herbeizuführen.

In einer Ausführungsform der beanspruchten Lageranordnung sind die zumindest zwei Ultraschallköpfe zu einem Erfassen eines Verschleißzustands der ersten und/oder zweiten Lagerkomponente ausgebildet. Der Verschleißzustand ist im Wesentlichen durch eine Verschleißtiefe charakterisiert, die beispielsweise im Bereich einer ersten und/oder zweiten Axialposition vorliegt, an der der erste bzw. zweite Ultraschallkopf angeordnet ist. Dazu ist beispielsweise eine Laufzeitdifferenz für ein Ultraschallecho eines Ultraschallpulses gegenüber einem Referenzzustand ermittelbar. Der Referenzzustand kann beispielsweise ein verschleißfreier Neuzustand der ersten und/oder zweiten Lagerkomponente sein. Ein Ultraschallecho eines Ultraschallpulses kann an einer Materialgrenze, beispielsweise an Oberflächen der ersten bzw. zweiten Lagerkomponente hervorgerufen werden, die mit Schmierstoff benetzt ist. Die beanspruchte Sensoranordnung erlaubt es damit, im Wesentlichen gleichzeitig mit dem Winkelversatz zwischen der ersten und zweiten Lagerkomponente auch deren jeweilige Verschleißzustände zu erfassen. Dadurch wird eine erhöhte Funktionsintegration erzielt. Das im Wesentlichen gleichzeitige Erfassen von Winkelversatz und Verschleißzustand liefert aussagekräftige Informationen über den Betriebszustand des Gleitlagers, so dass gegebenenfalls gezielt in dessen Betrieb eingegriffen werden kann. Insbesondere kann basierend auf Winkelversatz und Verschleißzustand der ersten und/oder zweiten Lagerkomponente mittels eines entsprechenden Lebensdauermodells die verbleibende technisch nutzbare Lebensdauer des Gleitlagers präzise prognostiziert werden. Ebenso kann basierend darauf eine Auslegungsrechnung des Gleitlagers geprüft werden. Gleichermaßen können die Auswirkungen unterschiedlicher Betriebsstrategien unmittelbar erfasst und analysiert werden.

Des Weiteren können die zumindest zwei Ultraschallköpfe zum Aussenden unterscheidbarer Ultraschallpulse ausgebildet sein. Beispielsweise können die Ultraschallpulse unterschiedlicher Ultraschallköpfe unterschiedliche Frequenzen aufweisen, so dass auch deren Ultraschallechos voneinander unterscheidbar sind. Dies erlaubt es, die zumindest zwei Ultraschallköpfe gleichzeitig zu betreiben und Ultraschallechos anderer Ultraschallköpfe beim Empfangen herauszufiltern. Dadurch ist die Anzahl an Ultraschallköpfen in einfacher Weise steigerbar, wodurch die erzielbare Messgenauigkeit gesteigert wird. Alternativ oder ergänzend können die Ultraschallpulse von den zumindest zwei Ultraschallköpfen in unterschiedlichen Zeitfenstern ausgesendet werden. Dementsprechend sind die einzelnen Ultraschallechos beispielsweise nach einem Zeitscheibenprinzip unterscheidbar. Ein Aussenden von Ultraschallpulsen in unterschiedlichen Zeitfenstern erlaubt ein Erfassen von Schmierfilmdicken, das besonders robust gegen Störeinflüsse ist. Dementsprechend kann die beanspruchte Sensoranordnung auch in widrigen Umgebungen und Anwendungen zuverlässig eingesetzt werden.

Darüber hinaus können die zumindest zwei Ultraschallköpfe unabhängig voneinander ansteuerbar ausgebildet sein. Die Ultraschallköpfe sind dazu geeignet, zu beliebigen, und damit einstellbaren Zeitpunkten, Ultraschallpulse auszusenden und zu empfangen. Ebenso ist es bei jedem Ultraschallkopf möglich, zu einem einstellbaren Zeitpunkt eine aktive Membrandämpfung hervorzurufen, um so ein Empfangen eines Ultraschallechos vorzubereiten, das präzise zu Erfassen ist. Dies erlaubt es beispielsweise, unterschiedliche, also nicht baugleiche Ultraschallköpfe einzusetzen und für jeden der Ultraschallköpfe ein angepasstes Ansteuerungskonzept umzusetzen. Dadurch sind die technischen Vorzüge unterschiedlicher Ultraschallköpfe im Rahmen der beanspruchten Sensoranordnung ausschöpfbar. Durch das unabhängige Ansteuern der Ultraschallköpfe ist ferner deren Betrieb im Rahmen der beanspruchten Sensoranordnung in einfacher Weise koordinierbar.

In einer weiteren Ausführungsform der beanspruchten Sensoranordnung kann die erste Lagerkomponente als drehbare Lagerkomponente ausgebildet sein und korrespondierend die zweite Lagerkomponente als stationäre Lagerkomponente. Die zumindest zwei Ultraschallköpfe können dementsprechend auf der ersten oder zweiten Lagerkomponente angeordnet sein. Ultraschallköpfe, die auf der zweiten, also der stationären Lagerkomponente angeordnet sind, sind in einfacher Weise anschließbar, beispielsweise über eine Leitung mit Energie- und Datenanbindung. Ferner werden Beschleunigungseinwirkungen an der zweiten Lagerkomponente auf die Ultraschallköpfe minimiert, was wiederum die Verwendung von einfacheren, weniger robusten Ultraschallköpfen erlaubt. Alternativ oder ergänzend können die Ultraschallköpfe auch auf ersten, also der drehbaren Lagerkomponente, angeordnet sein. Die beanspruchte Lösung ist damit auch auf Anwendungen übertragbar, in denen eine stationäre Lagerkomponente nicht zugänglich ist.

Ebenso kann die beanspruchte Sensoranordnung auch über zumindest einen dritten Ultraschallkopf verfügen, der zum ersten Ultraschallkopf entlang einer Umfangsrichtung des Gleitlagers beabstandet angeordnet ist. Analog kann der dritte Ultraschallkopf auch zum zweiten Ultraschallkopf entlang der Umfangsrichtung beabstandet ausgebildet angebracht sein. Durch eine derartige Beabstandung des dritten Ultraschallkopfes können die Ultraschallköpfe an einer Oberfläche des Gleitlagers in einem flächigen Muster, beispielsweise einer Gitteranordnung, auch Array-Anordnung genannt, angeordnet sein. Eine solche Anordnung erlaubt es, um dem Umfang verteilt an der ersten und/oder zweiten Lagerkomponente einen Verschleiß und/oder eine Schmierfilmdicke zu messen. Dies erlaubt es, ein aussagekräftigeres Bild über den Betriebszustand des Gleitlagers zu gewinnen, beispielsweise durch ein Plausibilisieren von Messung anderer Ultraschallköpfen. Dadurch sind defekte Ultraschallköpfe in zuverlässiger Weise selbsttätig identifizierbar. Ebenso können lokale Störungen im Gleitlager so schnell erkannt werden. Darüber hinaus kann ein Winkelversatz bezogen auf mehrere Raumrichtungen ermittelt werden. Dies ermöglicht wiederum Rückschlüsse darauf, welche Einflüsse auf das Gleitlager einen erhöhten Winkelversatz, und damit eine erhöhte Beanspruchung hervorrufen. Insbesondere ist mittels eines entsprechenden dritten Ultraschallkopfs eine räumliche Lastverteilung an der ersten bzw. zweiten Lagerkomponente erfassbar.

Die skizzierte Aufgabenstellung wird auch durch ein erfindungsgemäßes Verfahren zum Erfassen eines Winkelversatzes zwischen einer ersten und zweiten Lagerkomponente eines Gleitlagers mittels einer Sensoranordnung gelöst. Die im erfindungsgemäßen Verfahren eingesetzte Sensoranordnung umfasst zumindest einen ersten und einen zweiten Ultraschallkopf, die zu einem Aussenden und Empfangen von Ultraschallpulsen ausgebildet sind. Das Verfahren umfasst einen ersten Schritt, in dem zwischen der ersten und zweiten Lagerkomponente eine Relativbewegung hergestellt wird. Die Relativbewegung entspricht hierbei einer Bewegung am Gleitlager bei einem bestimmungsgemäßen Gebrauch. Durch das Einstellen der Relativbewegung wird zwischen der ersten und zweiten Lagerkomponente ein Schmierfilm ausgebildet. In einem zweiten Schritt erfolgt ein Erfassen einer ersten Schmierfilmdicke zwischen der ersten und zweiten Lagerkomponente an einer ersten Axialposition. Die erste Schmierfilmdicke wird mittels des ersten Ultraschallkopfes erfasst. Dadurch, dass jeweils zwischen der ersten und der zweiten Lagerkomponente und dem Schmierfilm eine Schichtgrenze zwischen zwei Medien vorliegt, werden dort jeweils identifizierbare Ultraschallechos hervorgerufen, die durch den ersten Ultraschallkopf erfassbar sind. Aus den daraus ermittelbaren Laufzeiten ist wiederum die erste Schmierfilmdicke ermittelbar. In einem dritten Schritt erfolgt korrespondierend zum zweiten Schritt ein Erfassen einer zweiten Schmierfilmdicke zwischen der ersten und zweiten Lagerkomponente an einer zweiten Axialposition mittels des zweiten Ultraschallkopfes. Die erste und zweite Axialposition sind entlang einer Drehachse des Gleitlagers, die einer Bauteilhauptachse der ersten und/oder zweiten Lagerkomponente entsprechen kann, voneinander beabstandet. In einem vierten Schritt erfolgt ein Ermitteln des Winkelversatzes zwischen der ersten und zweiten Lagerkomponente. Der Winkelversatz wird anhand der ersten und zweiten Schmierfilmdicke ermittelt. Dazu kann ein Axialabstand zwischen der ersten und zweiten Axialposition mit eingesetzt werden. Wenn die erste und zweite Schmierfilmdicke identisch sind, liegt ein bestimmungsgemäßer gerader Lauf des Gleitlagers vor. Je höher eine Differenz zwischen der ersten und zweiten Schmierfilmdicke ist, umso höher ist der Winkelversatz zwischen der ersten und zweiten Lagerkomponente. Die höher wiederum der Winkelversatz ist, umso eher droht eine Berührung zwischen der ersten und zweiten Lagerkomponente an deren Endbereichen. Der zweite, dritte und vierte Schritt können dabei sequentiell oder im Wesentlichen gleichzeitig durchgeführt werden, um so eine kontinuierliche Erfassung des Winkelversatzes zu gewährleisten.

Das erfindungsgemäße Verfahren erlaubt es damit, mit einem Minimum an Messungen im Wesentlichen verzögerungsfrei und präzise einen Winkelversatz in einem Gleitlager zu erfassen. Dadurch ist eine eintretende übermäßige Beanspruchung durch einen steigenden Winkelversatz frühzeitig erkennbar, was wiederum das frühzeitige Einleiten von Gegenmaßnahmen ermöglicht. Das erfindungsgemäße Verfahren bietet folglich eine einfache, kosteneffiziente und zuverlässige Möglichkeit, Beschädigungen an Gleitlagern zu vermeiden. Die im erfindungsgemäßen Verfahren eingesetzt Sensoranordnung kann ferner gemäß einer der oben skizzierten Ausführungsformen ausgebildet sein.

In einer Ausführungsform des beanspruchten Verfahrens erfolgt in einem weiteren fünften Schritt mittels des ersten und/oder zweiten Ultraschallkopfes ein Ermitteln eines Verschleißzustands der ersten und/oder zweiten Lagerkomponente. Dazu wird anhand eines Ultraschallechos eine Radialabmessung der ersten bzw. zweiten Lagerkomponente ermittelt. Durch einen Verschleiß der entsprechenden Lagerkomponente wird das Ultraschallecho an der Schichtgrenze zwischen dieser Lagerkomponente und dem Schmierfilm gegenüber einem verschleißfreien Zustand verfrüht reflektiert. Daraus wiederum ist eine vorliegende Verschleißtiefe erfassbar. Der fünfte Schritt kann im beanspruchten Verfahren im Wesentlichen gleichzeitig mit dem zweiten oder dritten Schritt durchgeführt werden. Alternativ kann der fünfte Schritt auch zwischen dem zweiten, dritte bzw. vierten Schritt oder danach durchgeführt werden. Die Verwendung von Ultraschallköpfen bietet in einfacher Weise ein hinreichendes Maß an Messgenauigkeit um einen Verschleiß an der ersten bzw. zweiten Lagerkomponente zu erkennen und zu quantifizieren.

Darüber hinaus kann das beanspruchte Verfahren auch dazu ausgebildet sein, Ablagerungen auf der ersten und/oder zweiten Lagerkomponente zu erfassen. Die Ablagerungen werden erfassbar, sobald diese ein erkennbares separates Ultraschallecho hervorrufen. Dementsprechend kann das beanspruchte Verfahren dazu ausgebildet sein, ein solches zusätzliches Ultraschallecho zu erkennen und gegebenenfalls eine Warnung auszugeben. Das beanspruchte Verfahren ist demzufolge vielseitig nutzbar.

Des Weiteren kann eine Verschleißtiefe, die im fünften Schritt erfassbar ist, beim vierten Schritt berücksichtigt werden, in dem der Winkelversatz ermittelt wird. Dadurch wird die Präzision beim Erfassen des Winkelversatzes weiter gesteigert. Insbesondere weist das beanspruchte Verfahren dadurch während des Betriebs des Gleitlagers eine selbsttätige Adaptionsfähigkeit auf, die auch einen automatisierten langfristigen Einsatz des Verfahrens erlaubt. Beispielsweise kann das beanspruchte Verfahren für eine dauerhaftes Condition Monitoring des Gleitlagers verwendet werden. Nachjustierungen bzw. Nachkalibrierungen sind entbehrlich und erlauben somit auch in praktikabler Form dessen massenhaften Einsatz, beispielsweise in ganzen Flotten von Windkraftanlagen. Insgesamt werden so die Möglichkeiten zur Datenbeschaffung für Gleitlager verbessert, die wiederum den schnellen Aufbau von Erfahrungsdatenbanken ermöglichen, anhand derer Künstliche Intelligenzen für Schädigungsprognosen trainierbar sind. Ferner sind gezielt Daten über das Verhalten, insbesondere ein Verschleißverhalten, des Gleitlagers in variablen Betriebsbedingungen genau erfassbar. Dies umfasst transiente Betriebszustände wie ein Anfahren oder Verzögern. Dadurch ist eine gezieltere Beurteilung des Verschleißverhaltens möglich als mit Rechenmodellen, die von konstanten Betriebsbedingungen ausgehen.

Darüber hinaus kann in einem sechsten Schritt ein Ultraschallecho eines Referenzreflektors erfasst werden zu einem Ermitteln einer Drehzahl im Gleitlager. Der Referenzreflektor kann eine charakteristische Struktur, beispielsweise ein Rillenmuster, in der ersten und/oder zweiten Lagerkomponente sein, die ein unterscheidbares Ultraschallecho hervorruft. Dementsprechend kann mittels des beanspruchten Verfahrens eine weitere Funktionsintegration erzielt werden, so dass dezidierte Drehzahlsensoren entbehrlich sind. Das beanspruchte Verfahren erlaubt es somit, den Aufbau einer Gleitlageranordnung zu vereinfachen und kosteneffizienter zu gestalten.

Ferner kann der erste Ultraschallkopf in einem ersten Zeitfenster betätigt werden und der zweite Ultraschallkopf in einem separaten zweiten Zeitfenster. Das erste und zweite Zeitfenster sind insoweit separat, dass sich diese zu keinem Zeitpunkt überlappen. Im ersten Zeitfenster erfolgt ein Aussenden eines Ultraschallpulses und ein Empfangen zumindest eines dadurch hervorgerufenen Ultraschallechos durch den ersten Ultraschallkopf. Das zweite Zeitfenster beginnt frühestens, sobald das zumindest eine Ultraschallecho, das vom ersten Ultraschallkopf hervorgerufen ist, von diesem auch empfangen ist. Hierdurch werden der Betrieb des ersten und zweiten Ultraschallkopfes nach einem Zeitscheibenprinzip koordiniert. Dies erlaubt es in einfacher Weise, Ultraschallechos voneinander zu unterscheiden und baugleiche Ultraschallköpfe einzusetzen, deren Ultraschallpulse identisch sind. Infolgedessen wird das Prinzip der Gleichteileverwendung für die erforderliche Sensoranordnung umgesetzt, was deren Kosteneffizienz erhöht. Auch eine Reparatur durch den Austausch eines Ultraschallkopfs wird so ermöglicht. Das beanspruchte Verfahren kann somit in einfacher Weise verwirklicht werden.

Ebenso wird die zugrundeliegende Aufgabenstellung durch ein erfindungsgemäßes Sensorsystem gelöst, das zu einem Überwachen eines Gleitlagers ausgebildet ist. Das Sensorsystem umfasst eine Sensoranordnung, die datenübertragend mit einer Auswertungseinheit verbunden ist. Messsignale von der Sensoranordnung werden an die Auswertungseinheit übertragen und von dieser ausgewertet, wodurch das Überwachen des Gleitlagers gewährleistet wird. Die Sensoranordnung ist gemäß einer der oben skizzierten Ausführungsformen ausgebildet. Ferner kann die Auswertungseinheit dazu ausgebildet sein, im Zusammenspiel mit der Sensoranordnung, ein Verfahren nach einer der oben beschriebenen Ausführungsformen durchzuführen. Das Sensorsystem ist in einfacher Weise mit einem bestehenden Gleitlager kombinierbar und darin in vorliegender Winkelversatz erfassbar. Das erfindungsgemäße Sensorsystem ist somit auch als Nachrüstsatz bereitstellbar, und somit auch bestehende Gleitlager ohne weitergehende Anpassungsmaßnahmen, wie beispielsweise ein Umarbeiten der entsprechenden Lagerkomponente, überwachbar.

Gleichermaßen wird die eingangs dargestellte Aufgabe auch durch eine erfindungsgemäße Gleitlageranordnung gelöst. Die Gleitlageranordnung umfasst eine erste und zweite Lagerkomponente, die ein Gleitlager bilden und zwischen denen im Betrieb ein Schmierfilm ausbildbar ist, durch den eine Relativbewegung zwischen der ersten und zweiten Lagerkomponente unterstützbar ist. Die erste und/oder zweite Lagerkomponente ist mit einer Sensoranordnung verbunden, durch die ein Winkelversatz zwischen der ersten und zweiten Lagerkomponente erfassbar ist. Erfindungsgemäß ist die Sensoranordnung gemäß einer der oben dargestellten Ausführungsformen ausgebildet.

Ferner wird die skizzierte Aufgabenstellung durch ein erfindungsgemäßes Planetengetriebe gelöst, das als Windkraftanlagengetriebe ausgebildet sein kann. Das Planetengetriebe umfasst einen Planetenträger mit zumindest einer Planetenradachse. Die Planetenradachse ist drehfest mit dem Planetenträger verbunden und dient als erste Lagerkomponente. Das Planetengetriebe umfasst auch zumindest ein Planetenrad, das im montierten Zustand auf der Planetenradachse angeordnet ist. Das Planetenrad dient als zweite Lagerkomponente. Zwischen der Planetenradachse und dem Planetenrad ist im Betrieb ein Schmierfilm ausbildbar. Das Planetenrad und die Planetenradachse bilden dadurch ein Gleitlager in einer Gleitlageranordnung. Erfindungsgemäß ist diese Gleitlageranordnung als eine Gleitlageranordnung im Sinne der oben beschriebenen erfindungsgemäßen Gleitlageranordnung ausgebildet. Insbesondere umfasst die Gleitlageranordnung eine Sensoranordnung nach einer der oben dargestellten Ausführungsformen. Planetenräder und ihre zugehörigen Planetenradachsen, insbesondere in Windkraftanlagengetrieben, sind im Betrieb erheblichen Beanspruchungen ausgesetzt, durch die eine Schiefstellung des Planetenrad hergerufen werden kann. Dadurch kann ein betriebsrelevanter Winkelversatz zwischen dem Planetenrad und der Planetenradachse eintreten. Demzufolge werden die technischen Vorzüge der erfindungsgemäßen Gleitlageranordnung und der erfindungsgemäßen Sensoranordnung bei Verwendung in einem Planetengetriebe in besonderem Umfang verwirklicht.

Die beschriebene Aufgabenstellung wird gleichermaßen durch ein erfindungsgemäßes Computerprogrammprodukt gelöst, das zu einem Simulieren eines Betriebszustands einer Sensoranordnung in einem Betrieb eines Gleitlagers ausgebildet ist. Erfindungsgemäß ist die zu simulierende Sensoranordnung gemäß einer der oben dargestellten Ausführungsformen ausgebildet. Dazu kann das Computerprogrammprodukt einen Datensatz aufweisen, der den Aufbau der ersten und zweiten Lagerkomponenten, deren Verschleißcharakteristika, deren Steifigkeiten, deren kinematische Bedingungen, die Axialpositionen, die Umfangspositionen der Ultraschallköpfe, Mengenangaben und Viskositätsangaben des Schmierstoffs umfasst. Das Computerprogrammprodukt kann auch eine Schnittstelle um Bereitstellen von Eingabeparametern zur Simulation des Betriebsverhaltens aufweisen und/oder eine Schnittstelle zum Ausgeben von Resultaten der Simulation. Das Computerprogrammprodukt kann beispielsweise als sogenannter Digitaler Zwilling ausgebildet sein, wie beispielsweise in US 2017/286572 A1 dargestellt. Der Offenbarungsgehalt von US 2017/286572 A1 wird durch Verweisung in die vorliegende Anmeldung mit einbezogen. Mittels des erfindungsgemäßen Computerprogrammprodukts ist eine Sensoranordnung gemäß einer der oben beschriebenen Ausführungsformen per Simulation erprobbar und anpassbar. Die überraschende Einfachheit der beanspruchten Sensoranordnung erlaubt eine praxistaugliche Umsetzung per Simulation mit relativ wenig Rechenleistung. Dementsprechend ist die erfindungsgemäße Sensoranordnung mittels des erfindungsgemäßen Computerprogrammprodukt in einfacher Weise für unterschiedliche Anwendungsfälle optimierbar.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine erste Ausführungsform der beanspruchten Sensoranordnung im Längsschnitt;
- FIG 2: schematisch die erste Ausführungsform der beanspruchten Sensoranordnung im Querschnitt;
- FIG 3: schematisch eine zweite Ausführungsform der beanspruchten Sensoranordnung;
- FIG 4: eine Funktionsweise der ersten Ausführungsform der beanspruchten Sensoranordnung;
- FIG 5: schematisch eine dritte Ausführungsform der beanspruchten Sensoranordnung.

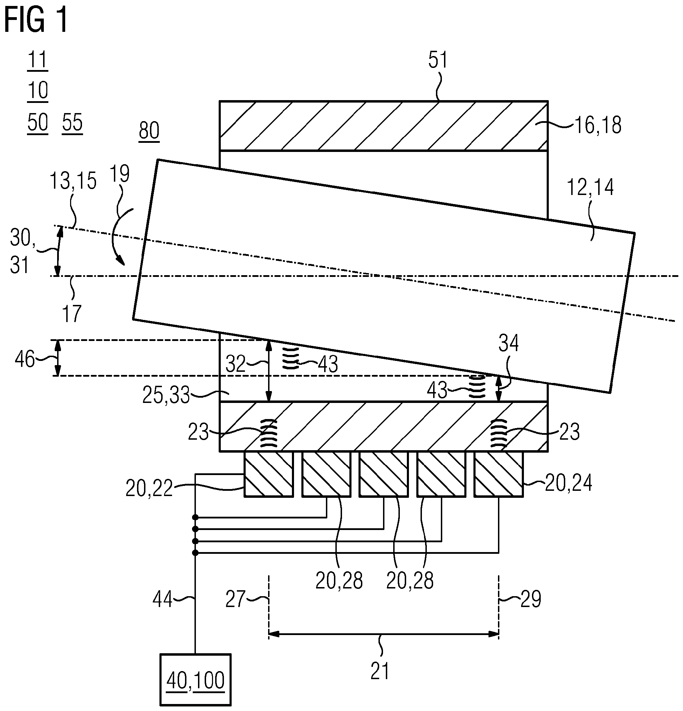

In FIG 1 ist schematisch ein Aufbau einer ersten Ausführungsform der beanspruchten Sensoranordnung 10 im Längsschnitt dargestellt, die in einem Sensorsystem 50 angeordnet ist. Die Sensoranordnung 10 wirkt mit einer ersten und einer zweiten Lagerkomponente 12, 16 zusammen, die als Welle 14 und als Buchse 18 ausgebildet sind und im Wesentlichen ein Gleitlager 11 bilden. Zwischen der ersten und zweiten Lagerkomponente 12, 16 befindet sich ein Schmierstoff 25, durch den zwischen der ersten und zweiten Lagerkomponente 12, 16 ein Schmierfilm 33 ausgebildet ist. Der Schmierfilm 33 wird durch eine Relativbewegung 19 zwischen der ersten und zweiten Lagerkomponente 12, 16 hervorgerufen. Die Relativbewegung 19 ist dabei eine Rotation der Welle 14. Dadurch verwirklichen die erste und zweite Lagerkomponente 12, 16 eine Gleitlageranordnung 55. Im Betrieb der Gleitlageranordnung 55 stellt sich zwischen der ersten und zweiten Lagerkomponente 12, 16 ein Winkelversatz 30 ein. Der Winkelversatz 30 stellt den Winkel dar, der zwischen einer ersten Bauteilhauptachse 13 der ersten Lagerkomponente 12 und einer zweiten Bauteilhauptachse 17 der zweiten Lagerkomponente 16 vorliegt. Die Relativbewegung 19, also die Rotation der ersten Lagerkomponente 12 gegenüber der stationären zweiten Lagerkomponente 14 definiert ferner eine Drehachse 15 der Gleitlageranordnung 55. Unter den Bauteilhauptachsen 13, 17 sind die Richtungen zu verstehen, entlang der sich die erste bzw. zweite Lagerkomponente 12, 14 im Wesentlichen erstrecken. Durch dem Winkelversatz 30 ergibt sich an einem Bereich, in FIG 1 rechts dargestellt, eine Annäherung zwischen der ersten und zweiten Lagerkomponente 12, 16, die einer Versatzstrecke 31 entspricht. Durch den Winkelversatz 30 droht somit eine Berührung zwischen der ersten und zweiten Lagerkomponente 12, 16, was einen übermäßigen Verschleiß nach sich zieht.

Die Sensoranordnung 10 umfasst eine Mehrzahl an Ultraschallköpfen 20, die an der zweiten Lagerkomponente 16 angeordnet sind. Die Ultraschallköpfe 20 sind im Wesentlichen entlang der zweiten Bauteilhauptachse 17 an einer Außenseite 51 zueinander beabstandet positioniert und jeweils dazu ausgebildet, Ultraschallpulse 23 auszusenden und Ultraschallechos 43 zu empfangen. Die Ultraschallköpfe 20 sind im Bereich einer Lastzone des Gleitlagers 11 angeordnet. Ein erster Ultraschallkopf 22 ist, entlang der zweiten Bauteilhauptachse 17 betrachtet, an einer ersten Axialposition 27 angeordnet und ein zweiter Ultraschallkopf 24 an einer zweiten Axialposition 29. Zwischen dem ersten und zweiten Ultraschallkopf 22, 24 liegt dadurch ein Axialabstand 21 vor. Zwischen dem ersten und zweiten Ultraschallkopf 22, 24 sind weitere Ultraschallköpfe 28 positioniert. Der erste Ultraschallkopf 22 ist dazu ausgebildet, mittels der Ultraschallpulse 23 im Bereich der ersten Axialposition 27 eine erste Schmierfilmdicke 32 zu erfassen. Korrespondierend ist der zweite Ultraschallkopf 24 dazu ausgebildet, mittels der Ultraschallpulse 23 im Bereich der zweiten Axialposition 29 eine zweite Schmierfilmdicke 34 zu erfassen. Eine Dickendifferenz 46 zwischen der ersten und zweiten Schmierfilmdicke 32, 34 korrespondiert dabei mit der Winkelversatz 30 zwischen der ersten und zweiten Lagerkomponente 12, 16. Die Ultraschallköpfe 20 sind über Datenverbindungen 44 mit einer Auswertungseinheit 40 verbunden, die dazu ausgebildet ist, eine solche Dickendifferenz 46 zu ermitteln. Basierend hierauf ist der Winkelversatz 30 in der Gleitlageranordnung 55 mit der ersten und zweiten Lagerkomponente 12, 16 ermittelbar. Dazu ist die Auswertungseinheit 40 mit einem geeigneten Computerprogrammprodukt ausgestattet, das dazu ausgebildet ist, ein entsprechendes Verfahren 100 durchzuführen. Die Gleitlageranordnung 55, zu der auch die Sensoranordnung 10 gehört, ist in einem nicht näher gezeigten Computerprogrammprodukt 80 abgebildet, durch das die Sensoranordnung 10 und die Gleitlageranordnung 55 in ihrem Verhalten während des Betriebs simulierbar sind. Das Computerprogrammprodukt 80 ist ferner dazu einsetzbar, eine Auslegung des Gleitlagers 11 und/oder der Gleitlageranordnung 55 zu prüfen und basierend hieraus anzupassen. Dazu kann beispielsweise eine Anpassung der Verzahnung 65 gehören.

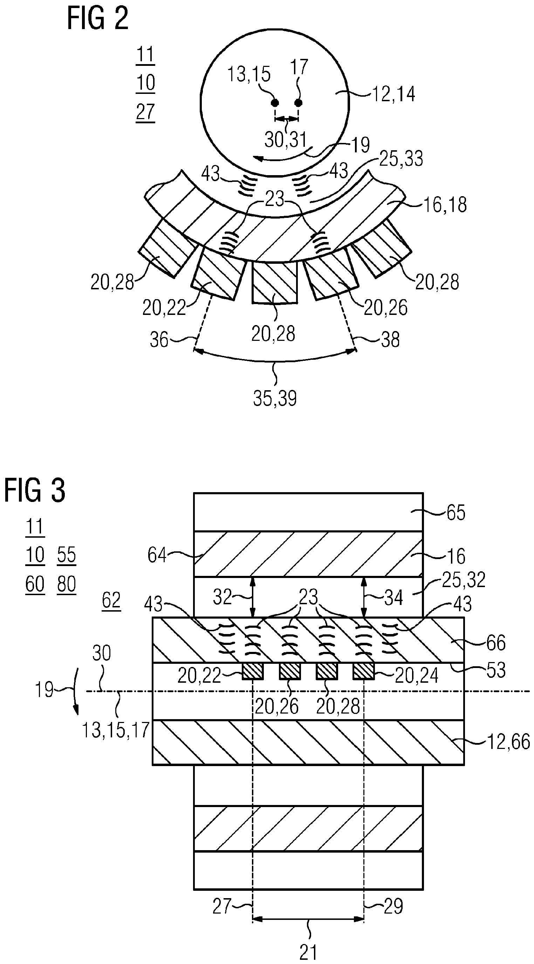

Die erste Ausführungsform aus FIG 1 ist in FIG 2 in einem Querschnitt dargestellt. Der Winkelversatz 30 und die zugehörige Versatzstrecke 31 zwischen der ersten und zweiten Bauteilhauptachse 13, 17 ist in FIG 1 als eine Strecke dargestellt. Ferner zeigt FIG 2, dass an der Außenseite 51 der zweiten Lagerkomponente 16, also der Buchse 18, entlang einer Umfangsrichtung 35, neben dem ersten Ultraschallkopf 22 weitere Ultraschallköpfe 20, 28 angeordnet sind. Der erste Ultraschallkopf 22 ist dabei, bezogen auf die zweite Bauteilhauptachse 17 und die Außenseite 51 der zweiten Lagerkomponente 16, an einer ersten Umfangsposition 36 angeordnet. Ein dritter Ultraschallkopf 26 ist an der Außenseite 51 der zweiten Lagerkomponente 16, bezogen auf die zweite Bauteilhauptachse 17, an einer zweiten Umfangsposition 38 angeordnet. Dadurch liegt zwischen dem ersten und dritten Ultraschallkopf 22, 26 entlang der Umfangsrichtung 35 ein Umfangsabstand 39 vor. Der dritte Ultraschallkopf 26 ist korrespondierend zum ersten Ultraschallkopf 22 zu einem Aussenden von Ultraschallpulsen 23 und Empfangen von Ultraschallechos 43 ausgebildet. Analog liegen auch nicht näher gezeigte Umfangsabstände 39 zwischen dem ersten Ultraschallkopf 22 und den weiteren Ultraschallköpfen 28 vor. Dadurch wird in der Sensoranordnung 10 eine Gitteranordnung bzw. Array-Anordnung der Ultraschallköpfe 20 erzielt. Dementsprechend ist mittels der beanspruchten Sensoranordnung 10 auch eine räumliche Ausrichtung des Winkelversatzes 30 erfassbar. Auch zu dieser Funktion ist das Verfahren 100, das mit der Auswertungseinheit 40 in FIG 1 umgesetzt wird, ausgebildet.

Eine zweite Ausführungsform der beanspruchten Sensoranordnung 10 ist in FIG 3 im Längsschnitt dargestellt, die auch einer Gleitlageranordnung 55 zugeordnet ist. Die Gleitlageranordnung 55 gehört zu einem nicht näher gezeigten Planetengetriebe 60, das einen Planetenträger 62 aufweist. Der Planetenträger 62 weist zumindest eine Planetenradachse 66 auf, die eine erste Lagerkomponente 12 der Gleitlageranordnung 55 bildet. Die Planetenradachse 66 ist drehstarr mit dem Planetenträger 62 verbunden und ist im Bezugssystem des Planetenträgers 62 stationär, also nicht drehfähig. Die Gleitlageranordnung 55 verfügt als zweite Lagerkomponente 16 über ein Planetenrad 64, das drehbar an der stationären ersten Lagerkomponente 12 angeordnet ist und eine Verzahnung 65 aufweist, die als Geradverzahnung oder Schrägverzahnung ausgebildet sein kann. Dazu ist zwischen der ersten und zweiten Lagerkomponente 12, 16 ein Schmierstoff 25 einbringbar, der durch eine Relativbewegung 19 zwischen der ersten und zweiten Lagerkomponente 12, 16 zu einem Schmierfilm 33 ausgebildet wird. Die Relativbewegung 19 ist dabei im Wesentlichen eine Drehung um eine Drehachse 15. Die Planetenradachse 66 ist als Hohlwelle ausgebildet, wobei an einer Innenseite 53 der Hohlwelle eine Mehrzahl an Ultraschallköpfen 20 angeordnet ist. Ein erster Ultraschallkopf 22 ist dabei, bezogen auf einer erste Bauteilhauptachse 13 der ersten Lagerkomponente 12, an einer ersten Axialposition 27 angeordnet. Korrespondierend dazu ist ein zweiter Ultraschallkopf 24, bezogen auf die erste Bauteilhauptachse 13, an einer zweiten Axialposition 29 angeordnet. Dadurch liegt zwischen dem ersten und zweiten Ultraschallkopf 22, 24 ein Axialabstand 21 vor. Darüber hinaus ist auch ein dritter Ultraschallkopf 26 und ein weiterer Ultraschallkopf 28 an der ersten Lagerkomponente 12 an der Innenseite 53 der ersten Lagerkomponente 12 angeordnet. Die Ultraschallköpfe 20, 22, 24, 26, 28 sind in einer Lastzone des Gleitlagers 11 angeordnet, deren Gestalt unter anderem von der Form der Verzahnung 65 abhängt, also davon, ob die Verzahnung 65 beispielsweise als Geradverzahnung oder Schrägverzahnung ausgebildet ist. Die Ultraschallköpfe 20, 22, 24, 26, 28 sind korrespondierend zu den Ultraschallköpfen 20, 22, 24, 26, 28 in FIG 1 und FIG 2 zum Aussenden von Ultraschallpulsen 23 und Empfangen von Ultraschallechos 43 ausgebildet. Dadurch ist eine erste Schmierfilmdicke 32 im Bereich der ersten Axialposition 27 und einer zweiten Schmierfilmdicke 34 im Bereich der zweiten Axialposition 29 ermittelbar. Basierend hierauf ist ein Winkelversatz 30 zwischen der ersten Bauteilhauptachse 13 und einer zweiten Bauteilhauptachse 17 der zweiten Lagerkomponente 16. Im Betriebszustand gemäß FIG 3 liegt in der Gleitlageranordnung 55 ein bestimmungsgemäßer gerader Lauf vor, so dass der Winkelversatz 30 im Wesentlichen Null beträgt, also die erste und zweite Bauteilhauptachse 13, 17 und die Drehachse 15 koinzidieren. Mittels der Sensoranordnung 10 nach FIG 3 ist der Betrieb des Planetengetriebes 60 in vorteilhafter Weise auf eintretende Winkelversätze 30, die zu erhöhten Beanspruchungen führen, überwachbar. Das Planetengetriebe 60 ist besonders vorteilhaft in einer Windkraftanlage einsetzbar. Die Gleitlageranordnung 55 mit der Sensoranordnung 10 ist ebenfalls in einem Computerprogrammprodukt 80 abgebildet, das dazu geeignet ist, das Betriebsverhalten der Gleitlageranordnung 55 und/oder der Sensoranordnung 10 zu simulieren.

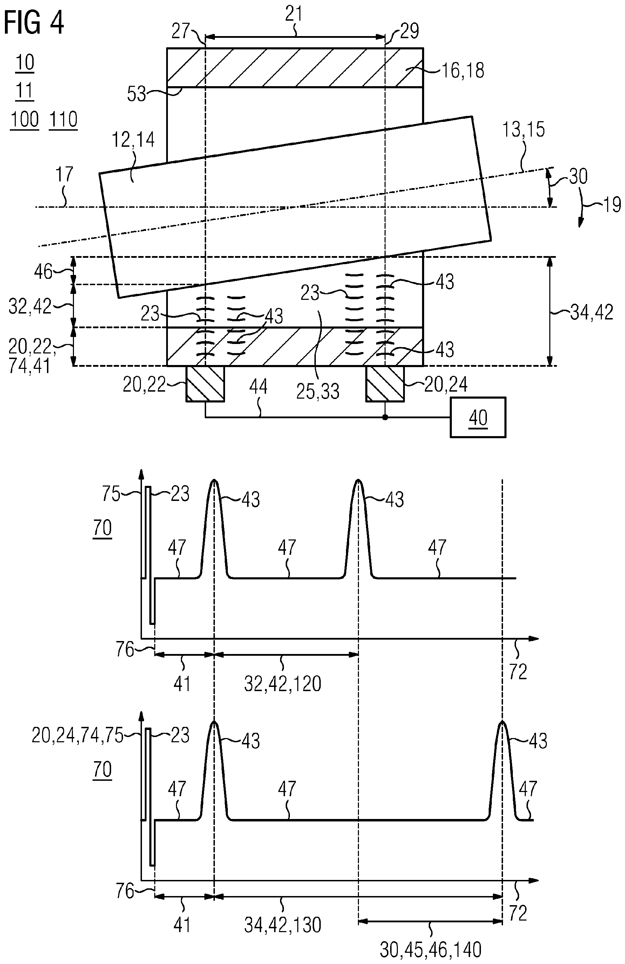

FIG 4 zeigt näher die Funktionsweise der ersten Ausführungsform der beanspruchten Sensoranordnung 10, wie bereits in FIG 1 und FIG 2 skizziert. Der in FIG 4 gezeigte Aufbau ist der Übersicht halber vereinfacht, indem unter anderem die weiteren Ultraschallköpfe 28 nicht gezeigt werden. FIG 3 zeigt in einem mittleren Bereich ein Diagramm 70, in dem eine Empfangsintensität 75 des ersten Ultraschallkopfs 22 an einer Größenachse 74 über eine Zeitachse 72 dargestellt ist. Korrespondierend dazu ist in einem unteren Abschnitt von FIG 4 ein gleichartiges Diagramm 70 für den zweiten Ultraschallkopf 24 dargestellt. Im Rahmen eines beanspruchten Verfahrens 100 geht FIG 4 davon aus, dass ein erster Schritt 110 abgeschlossen ist, in dem zwischen der ersten und zweiten Lagerkomponente 12, 16 eine Relativbewegung 19 eingestellt ist, so dass zwischen diesen ein Schmierfilm 33 vorliegt. Zu einem Startzeitpunkt 76 erfolgt ein Aussenden eines Ultraschallpulses 23, so dass unmittelbar nach dem Startzeitpunkt 76 kein Empfang am ersten und zweiten Ultraschallkopf 22, 24 möglich ist, was in FIG 3 durch Rechteckimpulse versinnbildlicht ist.

Das Aussenden der Ultraschallpulse 23 erfolgt im Wesentlichen gleichzeitig. Die Ultraschallpulse 23 sind voneinander unterscheidbar ausgebildet, so dass fehlerhafte Zuordnungen und Auswertungen der jeweiligen Ultraschallechos 43 vermieden werden. An das Aussenden der Ultraschallpulse 23 schließt sich jeweils ein Ultraschallecho 43 an, das durch eine teilweise Reflexion des Ultraschallpulses 23 an einer Innenseite 53 der zweiten Lagerkomponente 16 an einer Schichtgrenze zum Schmierfilm 33 hervorgerufen wird. Das die zweite Lagerkomponente 16 im Bereich des ersten und zweiten Ultraschallkopfes 22, 24 gleich ausgebildet sind, erreichen die Ultraschallechos 43 diese auch im Wesentlichen gleichzeitig. Dadurch wird im Bereich des ersten und zweiten Ultraschallkopfes 22, 24 jeweils ein erster Abschnitt 41 einer Laufstrecke des jeweiligen Ultraschallpulses 23 und deren Ultraschallechos 43 vermessen. Der erste Abschnitt 41 entspricht dabei einer Wandstärke der zweiten Lagerkomponente 16, also der Buchse 18.

Darauf folgt beim ersten und zweiten Ultraschallkopf 22, 24 ein Rückgang der Empfangsintensität 75 auf einen Signalruhepegel 47. Anschließend erfolgt ein Empfangen eines weiteren Ultraschallechos 43 am ersten Ultraschallkopf 22, das durch eine zumindest teilweise Reflexion des Ultraschallpulses 23 an einer Schichtgrenze zwischen dem Schmierfilm 33 und der ersten Lagerkomponente 12 hervorgerufen wird. Aus einer Zeitdifferenz zwischen den Ultraschallechos 43 am ersten Ultraschallkopf 22 ergibt sich ein zweiter Abschnitt 42 der Laufstrecke des Ultraschallpulses 23. Der zweite Abschnitt 42 korrespondiert mit einer ersten Schmierfilmdicke 32, die im Bereich des ersten Ultraschallkopfs 22, also im Bereich einer ersten Axialposition 27, vorliegt. Dadurch wird ein zweiter Schritt 120 des beanspruchten Verfahrens 100 umgesetzt, in dem die erste Schmierfilmdicke 32 ermittelt wird.

Am zweiten Ultraschallkopf 24 wird zu einem späteren Zeitpunkt ein weiteres Ultraschallecho 43 empfangen, das durch eine zumindest teilweise Reflexion des entsprechenden Ultraschallpulses 23 an einer Schichtgrenze zwischen dem Schmierfilm 33 und der ersten Lagerkomponente 12 hervorgerufen wird. Durch eine Zeitdifferenz zwischen den Ultraschallechos 43 am zweiten Ultraschallkopf 24 wird auch dort ein zweiter Abschnitt 42 der Laufstrecke des zugehörigen Ultraschallpulses 23 erfasst. Der zweite Abschnitt 42 entspricht dabei einer zweiten Schmierfilmdicke 34 im Bereich des zweiten Ultraschallkopfs 24, also im Bereich einer zweiten Axialposition 29. Hierdurch wird ein dritter Schritt 130 im beanspruchten Verfahren 100 umgesetzt.

Ferner wird eine Echolaufzeitdifferenz 45 ermittelt, durch die unter Berücksichtigung eines Axialabstands 21 zwischen dem ersten und zweiten Ultraschallkopf 22, 24 eine Dickendifferenz 46 für den Schmierfilm 33 im Bereich der ersten und zweiten Axialposition 27, 29 ermittelt, die wiederum mit dem Winkelversatz 30 zwischen der ersten und zweiten Lagerkomponente 12, 16 korrespondiert. Dementsprechend wird ein vierter Schritt 140 im beanspruchten Verfahren 100 durchgeführt, in dem der Winkelversatz 30 ermittelt wird.

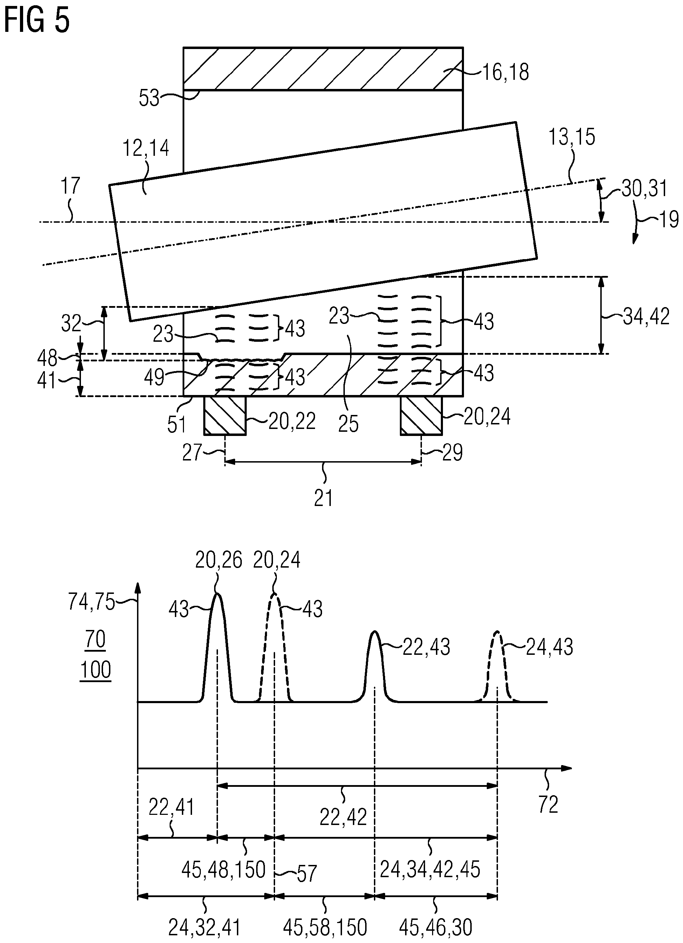

Eine dritte Ausführungsform der beanspruchten Sensoranordnung 10 in einer Gleitlageranordnung 55 ist in FIG 5 abgebildet. Die Gleitlageranordnung 55 umfasst eine erste und ein zweite Lagerkomponente 12, 16, wobei diese jeweils eine Bauteilhauptachse 13, 17 aufweisen. Aufgrund eines vorliegenden Betriebszustand werden die erste und zweite Lagerkomponente 12, 16 relativ zueinander ausgelenkt, so dass zwischen der ersten und zweiten Bauteilachse 13, 17 ein Winkelversatz 30 vorliegt. Während des Betriebs liegt zwischen der ersten Lagerkomponente 12, die als Welle 14 ausgebildet ist, und der zweiten Lagerkomponente 16, die als Buchse 18 ausgebildet ist, eine Relativbewegung 19 in Form einer Drehung der ersten Lagerkomponente 12 um eine Drehachse 15 vor. Korrespondierend zu den Ausführungsformen in FIG 1, FIG 2 und FIG 4 verfügt die Gleitlageranordnung 55 über eine Sensoranordnung 10 mit einer Mehrzahl an Ultraschallköpfen 20, die an einer Außenseite 51 der zweiten Lagerkomponente 16 angeordnet sind. Ein erster Ultraschallkopf 22 ist, bezogen auf die zweite Bauteilhauptachse 17, an einer ersten Axialposition 27 angeordnet und eine zweiter Ultraschallkopf 24 an einer zweiten Axialposition 29. Zwischen dem ersten und zweiten Ultraschallkopf 22, 24 liegt dabei ein Axialabstand 21 vor. Im Bereich des ersten Ultraschallkopfes 24, also im Bereich der ersten Axialposition 27, liegt an der zweiten Lagerkomponente 16 an deren Innenseite 53 eine Verschleißschädigung 49 vor, die gegenüber einem unbeschädigten Zustand der zweiten Lagerkomponente 16 wie an der zweiten Axialposition 29 eine Verschleißtiefe 48 aufweist.

Das Diagramm 70 in FIG 5 zeigt an einer Größenachse 74 eine Empfangsintensität 75 für Ultraschallechos 43, die vom ersten bzw. zweiten Ultraschallkopf 22, 24 empfangen werden. Die horizontale Achse des Diagramms 70 stellt eine Zeitachse 72 dar. Das Diagramm 70 geht von im Wesentlichen gleichzeitig ausgesendeten Ultraschallpulsen 23 vom ersten und zweitem Ultraschallkopf 22, 24 aus, die voneinander unterscheidbar sind. Der Ultraschallpuls 23 wird teilweise im Bereich der Verschleißschädigung 49 nach einem verkürzten ersten Abschnitt 41 der Laufstrecke des Ultraschallpulses 23 an einer Schichtgrenze zwischen der zweiten Lagerkomponente 16 um dem Schmierfilm 33 teilweise reflektiert. Dementsprechend erreicht das Ultraschallecho 43 im Bereich der ersten Axialposition 27 früher den ersten Ultraschallkopf 22 als das Ultraschallecho 43 an der korrespondierenden Schichtgrenze im Bereich der zweiten Axialposition 29. Dementsprechend wird ergibt sich am ersten und zweiten Ultraschallkopf 22, 24 eine unterschiedliche Länge für den ersten Abschnitt 41 des entsprechenden Ultraschallpulses 23. Daraus ergibt sich eine Echolaufzeitdifferenz 45, die mit der Verschleißtiefe 48 der Verschleißschädigung 46 an der ersten Axialposition 27 korrespondiert. Dementsprechend in die Verschleißtiefe 48 erfassbar und ein fünfter Schritt 150 des beanspruchten Verfahrens 100 umgesetzt. Basierend auf der Echolaufzeitdifferenz 45, die der Verschleißtiefe 48 entspricht, wird ein Referenzzeitpunkt 57 ermittelt, der dem Zeitpunkt des korrespondierenden Ultraschallechos 43 am zweiten Ultraschallkopf 24 entspricht. Dadurch wird ein Korrektur-Zeitintervall 58 ermittelt, durch das die Einwirkung der Verschleißschädigung 49 an der ersten Axialposition 27 für das Ermitteln des Winkelversatzes 30 ausgeglichen wird. Anhand einer Echolaufzeitdifferenz 45 von Ultraschallechos 43 am zweiten Ultraschallkopf 24 wird, im Wesentlichen analog zu FIG 4, die Länge eines zweiten Abschnitts 42 der Laufstrecke der Ultraschallpulse 23 im Bereich der zweiten Axialposition 29 ermittelt. Diese wiederum entspricht einer zweiten Schmierfilmdicke 34 im Bereich der zweiten Axialposition 29. Basierend auf dem Korrektur-Zeitintervall 58 ergibt sich ferner eine erste Schmierfilmdicke 32 im Bereich der ersten Axialposition 27. Darüber hinaus ist anhand des Korrektur-Zeitintervalls 58 und der zweiten Schmierfilmdicke 34 der Winkelversatz 30 zwischen der ersten und zweiten Lagerkomponente 12, 16 ermittelbar. Zu diesem Zweck wird eine angepasste Dickendifferenz 46 gebildet, die durch Berücksichtigung der Verschleißschädigung 49 auch an der ersten Axialposition 27 von einem unbeschädigten Zustand der zweiten Lagerkomponente 16 ausgeht. Hieraus wiederum ergibt sich eine Echolaufzeitdifferenz 45, die dem Winkelversatz 30 entspricht.

## Patentansprüche

1. Sensoranordnung (10) zum Erfassen eines Winkelversatzes (30) zwischen einer ersten und einer zweiten Lagerkomponente (12,16) eines Gleitlagers (11), umfassend zumindest zwei Ultraschallköpfe (20,22,24,26,28), **dadurch gekennzeichnet, dass** die zumindest zwei Ultraschallköpfe (20,22,24,26,28) zu einem separaten Erfassen jeweils einer Schmierfilmdicke (32,34) an unterschiedlichen Axialpositionen (27,29) des Gleitlagers (11) beabstandet angeordnet sind.

2. Sensoranordnung (10) nach Anspruch 1, **dadurch gekennzeichnet , dass** die zumindest zwei Ultraschallköpfe (20,22,24,26,28) zu einem Erfassen eines Verschleißzustands der ersten und/oder zweiten Lagerkomponente (12,16) ausgebildet sind.

3. Sensoranordnung (10) nach Anspruch 1 oder 2, **dadurch gekennzeichnet , dass** die zumindest zwei Ultraschallköpfe (20,22,24,26,28) zum Aussenden unterscheidbarer Ultraschallpulse (23) ausgebildet sind.

4. Sensoranordnung (10) nach einem der Ansprüche 1 bis 3, **dadurch gekennzeichnet , dass** die Ultraschallköpfe (20,22,24,26,28) unabhängig voneinander ansteuerbar ausgebildet sind.

5. Sensoranordnung (10) nach einem der Ansprüche 1 bis 4, **dadurch gekennzeichnet , dass** die zumindest zwei Ultraschallköpfe (20,22,24,26,28) die erste Lagerkomponente (12) als drehbare Lagerkomponente ausgebildet ist und die zweite Lagerkomponente (16) als stationäre Lagerkomponente ausgebildet ist.

6. Sensoranordnung (10) nach einem der Ansprüche 1 bis 5, **dadurch gekennzeichnet , dass** die Sensoranordnung (10) zumindest auch einen dritten Ultraschallkopf (26) aufweist, der zum ersten Ultraschallkopf (22) entlang einer Umfangsrichtung (35) des Gleitlagers (11) beabstandet angeordnet ist.

7. Verfahren (100) zum Erfassen eines Winkelversatzes (30) zwischen einer ersten und zweiten Lagerkomponente (12,16) eines Gleitlagers (11) mittels einer Sensoranordnung (10), die zumindest einen ersten und einen zweiten Ultraschallkopf (20, 22,24) aufweist, umfassend die Schritte:
a) Einstellen einer Relativbewegung (19) zwischen der ersten und zweiten Lagerkomponente (12,16);
b) Erfassen einer ersten Schmierfilmdicke (32) zwischen der ersten und zweiten Lagerkomponente (12,16) an einer ersten Axialposition (27) mittels des ersten Ultraschallkopfes (22);
c) Erfassen einer zweiten Schmierfilmdicke (34) zwischen der ersten und zweiten Lagerkomponente (12,16) an einer zweiten Axialposition (29) mittels des zweiten Ultraschallkopfes (24);
d) Ermitteln des Winkelversatzes (30) anhand der ersten und zweiten Schmierfilmdicke (32,34).

8. Verfahren (100) nach Anspruch 7, **dadurch gekennzeichnet, dass** in einem weiteren Schritt e) mittels des ersten und/oder zweiten Ultraschallkopfes (22, 24) ein Verschleißzustand der ersten und/oder zweiten Lagerkomponente (12,16) ermittelt wird.

9. Verfahren (100) nach Anspruch 8, **dadurch gekennzeichnet, dass** eine Verschleißtiefe (48) an der ersten und/oder zweiten Lagerkomponente (12,16) im Schritt d) berücksichtigt wird.

10. Verfahren (100) nach einem der Ansprüche 7 bis 9, **dadurch gekennzeichnet , dass** in einem weiteren Schritt f) ein Ultraschallecho (43) eines Referenzreflektors zum Ermitteln einer Drehzahl im Gleitlager (11) erfasst wird.

11. Verfahren (100) nach einem der Ansprüche 7 bis 10, **dadurch gekennzeichnet , dass** der erste Ultraschallkopf (22) in einem ersten Zeitfenster betätigt wird und der zweite Ultraschallkopf (20, 22, 24, 26, 28) in einem separaten zweiten Zeitfenster betätigt wird.

12. Sensorsystem (50) zum Überwachen eines Gleitlagers (11), umfassend eine Sensoranordnung (10), die datenübertragend mit einer Auswertungseinheit (40) verbunden ist, **dadurch gekennzeichnet , dass** die Sensoranordnung (10) nach einem der Ansprüche 1 bis 6 ausgebildet ist.

13. Gleitlageranordnung (55), umfassend eine erste und eine zweite Lagerkomponente (12, 16), zwischen denen ein Schmierfilm (33) ausbildbar ist, wobei die erste und/oder zweite Lagerkomponente (12,16) mit einer Sensoranordnung (10) verbunden ist, **dadurch gekennzeichnet, dass** die Sensoranordnung (10) nach einem der Ansprüche 1 bis 6 ausgebildet ist.

14. Planetengetriebe (60), umfassend einen Planetenträger (62) mit einer Planetenradachse (66) als erster Lagerkomponente (12) und ein Planetenrad (64) als zweiter Lagerkomponente (14), **dadurch gekennzeichnet, dass** die Planetenradachse (66) und das Planetenrad (64) zu einer Gleitlageranordnung (55) nach Anspruch 13 gehören.

15. Computerprogrammprodukt (80) zum Simulieren eines Betriebszustands einer Sensoranordnung (10) während eines Betriebs eines Gleitlagers (11), **dadurch gekennzeichnet, dass** die Sensoranordnung (10) nach einem der Ansprüche 1 bis 7 ausgebildet ist.
